# EUROPÄISCHE PATENTANMELDUNG

(11) **EP 0 987 461 A1**
(43) Veröffentlichungstag der Anmeldung: **22.03.2000**
(21) Anmeldenummer: 98117426.1
(22) Anmeldetag: 15.09.1998
(51) Int. Cl.: F16D 65/12

(54) **Bremseinheit mit einer nichtmettallischen Bremsscheibe aus Keramik und einer Nabe aus einem anderen Material**

(71) Anmelder: DaimlerChrysler AG, 70567 Stuttgart (DE)
(72) Erfinder: Gross, Gerhard, 73560 Böbingen (DE); Haug, Tillmann Dr., 88690 Uhldingen-Mühlhofen (DE); Rebstock, Kolja, 89073 Ulm (DE); Schwarz, Christian, 89075 Ulm (DE)

(57) **Zusammenfassung**

Die Erfindung betrifft eine Bremseinheit (1) mit einer Bremsscheibe (2) aus Keramik und einer Nabe (10,10') aus einem anderen Material, welche sich mit ihren einander zugekehrten Rändern radial überlappen und mittels eines Kranzes von die überlappenden Ränder axial durchdringenden Befestigungsbolzen (15) mechanisch verbunden sind. Erfindungsgemäß ist vorgesehen, daß die Befestigungsbolzen (15) gleichmäßig in die Drehmomentübertragung einbezogen sein sollen. Dazu sind in der Bremsscheibe (2) vorgesehene Mitnahmebohrungen (5,5') oder Mitnahmeschlitze erfindungsgemäß mittels einer Metall- oder Kohlenstoffhülse (20) plastisch ausgekleidet oder es ist der Scheibenwerkstoff örtlich gezielt in diesem Bereich (34) als plastisch verformbare C/C-Struktur ausgebildet. Die Erfindung betrifft ferner ein Verfahren zur Herstellung eines teilweise keramisierten Formkörpers, insbesondere einer Bremsscheibe (2) mit C/C-Struktur im Bereich der Mitnahmebohrungen(5,5') bzw. Mitnahmeschlitze. Das erfindungsgemäße Verfahren beruht darauf, daß die C/C-Struktur mittels einer Bordotierung wirksam vor einer Keramisierung durch Flüssigsilizierung geschützt werden kann. Die Erfindung betrifft weiter eine volständig nichtmetallische Bremseinheit (49,50) und ein Verfahren zu ihrer Herstellung.

## Beschreibung

Die Erfindung geht aus von einer Bremseinheit mit einer nichtmetallischen Bremsscheibe aus Keramik und einer Nahe aus Metall nach dem Oberbegriff des Ansprüchs 1 sowie von einem Verfahren zur Herstellung von derartigen Bremseinheiten nach dem Oberbegriff des Anspruchs 14. Die Erfindung betrifft ferner eine Bremseinheit mit einer nichtmetallischen Bremsscheibe aus faserverstärkter Keramik und einer Nabe aus der gleichen Fasermatrix nach dem Oberbegriff des Anspruchs 20 Verfahren zur Herstellung einer derartigen Bremseinheit nach dem Oberbegriff des Anspruchs 21.

Eine gattungsgemäße Bremsscheibe und ein gattungsgemäßes Herstellungsverfahren gehen z.B. aus der DE 44 38 455 C1 und der DE 44 38 456 A1 als bekannt hervor. In der DE 44 38 456 A1 ist ferner eine Reibeinheit mit einem Reibkörper und einem Kernkörper beschrieben, wobei der Kernkörper einen Fortsatz mit Verbindungsöffnungen in der Art einer nichtmetallischen Nahe aufweisen kann. Der Reibkörper besteht aus einem C-C/SiC-Werkstoff, während der Kernkörper aus einem kohlefaserverstärkten Kohlenstoff gebildet wird. Der Kernkörper und der Reibkörper sind über eine im wesentlichen Siliziuzmcarbid enthaltende Verbindungsschicht miteinander verbunden.

Ferner sind Bremseinheiten bekannt, bei denen die Bremsscheiben im gesamten Querschnitt aus Kohlenstoff bestehen. Hier sind besondere Maßnahmen zur Adaption dieser ringförmigen Scheibe an die Radnabe erforderlich. Dazu ist bisher ausschließlich eine hut- oder topfförmige Metallnabe vorgesehen. Diese ist an ihrem freien Rand mit der Bremsscheibe mechanisch verbunden. Diese mechanische Verbindung erfolgt mittels eines Kranzes von Befestigungsbolzen und entsprechende Mitnahmebohrungen oder radiale Schlitze im Bereich des Innenrandes bzw. der Innenseite der Bremsscheibe, die einen mechanisch belastbaren Formschluß zwischen Bremsscheibe und Metallnabe herstellen. Üblicherweise sind mindestens sechs oder acht Befestigungsbolzen vorgesehen.

Problematisch ist hier der enorme Unterschied der jeweiligen Ausdehnungskoeffizienten der Bremsscheibe (ca. 3-5 x 10⁻⁶/K) und der Metallnabe (ca. 15 - 20 x 10⁻⁶/K). Aus diesem Grund muß eine durch diese Art der Befestigung bedingte kraftschlüssige Verklemmung der Teile vermieden werden. Vielmehr müssen Radialdehnungen zwischen den beiden Teilen trotz der mechanischen Verbindung noch möglich sein. Die Mitnahmebohrungen lassen deshalb in Radialrichtung bewußt ein entsprechendes Spiel zum Bolzen zu, wogegen sie in Umfangsrichtung möglichst genau mit dem Bolzendurchmesser zusammengepaßt sind.

Die nabenseitig vorgegebene Lage der Bolzen einerseits und die scheibenseitige Lage der Mitnahmebohrungen andererseits müssen also möglichst genau übereinstimmen. Trotz aller Bemühungen um Fertigungsgenauigkeit ist eine Übereinstimmung im mathematischen Sinne mit vertretbarem Kostenaufwand jedoch nicht zu erreichen. Vielmehr ist in der Praxis mit einer nie ganz zu vermeidenden Lageabweichung von Bolzen einerseits und Mitnahmebohrung andererseits zu rechnen. Dies bedingt, daß lediglich zwei, höchstens drei der insgesamt vorgesehenen Bolzen bei mechanischer Beanspruchung der Bremse tragen, wogegen bei den übrigen Bolzen ein Spiel zur Mitnahmebohrung besteht, welches eine Lastaufnahme dieser Bolzen verhindert.

Nur nach einer plastischen oder verschleißbedingten Verformung im Bereich der tragenden Bolzen kann das Spiel im Bereich der anderen Bolzen reduziert werden, so daß auch diese mit tragen. Bei Kohlenstoffscheiben ist werkstoffbedingt eine ausreichende Plastizität im Bereich der Mitnahmebohrung gegeben, so daß hier spätestens nach der ersten mechanischen Extrembelastung der Bremse die drei zunächst allein tragenden Bolzen sich in die Leibung der zugehörigen Mitnahmebohrungen, diese plastisch verformend, eingedrückt haben, so daß das Spiel der übrigen Bolzen zu ihren Mitnahmebohrungen beseitigt ist und auch sie mittragen können.

Anders ist es hingegen bei gattungsgemäßen starren Keramikscheiben. Eier kann es bei der bekannten und soeben beschriebenen mechanischen Verbindung zwischen Bremsscheibe und Metallnabe allenfalls verschleißbedingt oder aufgrund einer plastischen Verformung der tragenden Bolzen zu einer Spielbeseitigung bei den nichttragenden Bolzen kommen, was jedoch sehr lange dauern kann.

Ein Ausweg besteht darin, wie in der DE 44 38 456 A1 beschrieben, auf eine nichtmetallische Nabe zurückzugreifen, was die Unterschiede hinsichtlich der Ausdehnungskoeffizienten deutlich verringern würde. Problematisch ist jedoch die Befestigung der Nabe an der Bremsscheibe, bedingt durch die hohe mechanische und thermische Beanspruchung bei Bremsmanövern.

Aufgabe der Erfindungist es, die gattungsgemäß zugrundegelegte Bremseinheit unter den Bedingungen einer starren Keramik-Bremsscheibe dahingehend zu verbessern, daß bei Verwendung einer Nabe aus Metall trotz unnachgiebiger Keramikscheibe auch ohne plastische oder verschleißbedingte Verformungen der Bolzen alle vorgesehenen Bolzen an der Übertragung des an der Bremsscheibe auftretenden Bremsmomentes annähernd gleichmäßig teilnehmen können. Aufgabe der Erfindung ist es ferner, eine weitere Befestigungsmöglichkeit für eine nichtmetallische Nabe bereitzustellen, sowie ein Herstellungsverfahren für derartige Bremseinheiten anzubieten.

Die Lösung besteht in einer Bremseinheit mit den Merkmalen des Anspruchs 1 bzw. 20 und einem Verfahren mit den Merkmalen des Anspruchs 14 bzw. 21.

Bei einer erfindungsgemäßen Bremseinheit mit einer Metallnabe ist also derjenige Bereich der Bremsscheibe, der die Leibung der Mitnahmebohrung darstellt, plastisch verformbar ausgebildet. Dies kann einerseits unter Zuhilfenahme einer plastisch verformbaren Hülse oder durch eine in diesem Bereich plastische Ausgestaltung des normalerweise starren Keramikwerkstoffes geschehen. Die plastische Verformbarkeit bewirkt, daß die erwähnte Lageabweichung von Bolzen einerseits und Mitnahmebohrung andererseits durch eine bei mechanischer Beanspruchung auftretende Verformung der Hülse ausgeglichen wird, so daß alle Bolzen tragen und kein unerwünschtes Spiel mehr vorhanden ist.

Bei einer erfindungsgemäßen Bremseinheit mit nichtmetallischer Nabe ist vorgesehen daß die Nabe in einen inneren Bereich der Keramikbremsscheibe eingeformt und mit Bor dotiert ist.

Vorteilhafte Weiterbildungen ergeben sich aus den Unteransprüchen. Als plastisch verformbare Auskleidung der Leibung kann eine welche Metallhülse dienen. Geeignet sind z.B. Hülsen aus Kupfer oder Aluminium. Statt einer Metallhülse ist auch eine Hülse aus kohlenstoffaser-verstärktem Kunststoff (CFK-Werkstoff) oder kohlenstoffaser-verstärktem Kohlenstoff (C/C-Werkstoff) verwendbar. Ein solcher nichtmetallischer CFK- bzw. C/C-Werkstoff ist in ausreichendem Maße plastisch verformbar. Die Hülse ist vorzugsweise an einer Umfangsstelle auf der ganzen Länge geschlitzt und liegt unter mechanischer Vorspannung an der Leibung der Bohrung oder des Schlitzes an. Der Längsschlitz macht die Hülse radial elastisch, so daß sie auch bei erheblichen Temperaturveränderungen, bei denen sie sich merklich ausdehnt oder zusammenzieht, stets unter Vorspannung an der Bohrungsleibung anliegt.

Die Wandstärke der Hülse ist abhängig von der Größe der Bremsscheibe bzw. vom Durchmesser der Bohrungen. Als Faustregel kann man annehmen, daß die Wandstärke 1/20 des Bohrungsdurchmssers beträgt. Bei Kfz-Bremsscheiben mit einem Bohrungsdurchmesser von z.B. 15 mm beträgt die Wandstärke ca. 0,75 mm; bei Bremseinheiten für die Bahn mit einem Bohrungsdurchmesser von z.B. 200 mm beträgt die Wandstärke ca. 10 mm.

Eine weitere Ausgestaltung der vorliegenden Erfindung zeichnet sich dadurch aus, daß der unmittelbare Bereich entlang der Leibung der Mitnahmebohrungen bzw. der Mitnahmeschlitze örtlich begrenzt Bor und/oder borhaltige Verbindungen und/oder Bor-abgebende Verbindungen enthält und in diesem Bereich als nichtkeramischer C/C-Werkstoff vorliegt, während die Keramik-Bremsscheibe als C/C-SiC-Werkstoff vorliegt. Diese Ausgestaltung beruht auf der Erkenntnis, daß Bor bzw. borhaltige oder Bor-abgebende Verbindungen bei der Flüssigsilizierung eine Siliziumcarbid-Bildung und Keramisierung wirksam verhindern. Ist der poröse C/C-Vorkörper, der der Flüssigsilizierung unterliegen soll, in bestimmten Bereichen mit Bor und/oder Borverbindungen dotiert, so findet in diesem Bereich keine Keramisierung statt. Eine "Hülse" als separates Bauteil gibt es bei dieser Ausgestaltung nicht.

Dasselbe Resultat wird aber auch erreicht, wenn die Mitnahmebohrungen bzw. Mitnahmeschlitze mittels einer Hülse aus kohlenstoffaser-verstärktem Kohlenstoff ausgekleidet sind, die Bor und/oder borhaltige Verbindungen und/oder Borabgebende Verbindungen enhält. Die Hülse geht an ihrem Außenumfang in Siliziumcarbid über und ist so mit der C/C-SiC-Bremsscheibe stoffschlüssig verbunden.

In beiden Fällen erhält man eine Bohrung, deren Leibung aus C/C-Werkstoff besteht, der allmählich in die Keramik übergeht. Diese C/C-Werkstoffstruktur ist, abhängig von der Größe der Bremsscheibe bzw. des Durchmessers der Mitnahmebohrungen oder Mitnahmeschlitze, vorzugsweise in einer radialen Schichtstärke von ca. 1/20 des Bohrungsdurchmessers, bei Kfz-Bremsscheiben z.B. von etwa 0,7 bis 2,0 mm, insbesondere etwa 1,0 mm vorgesehen. Das Bor und/oder die borhaltigen Verbindungen liegen in diesen Bereichen in einer Konzentration von 5 bis 35 Gew.-% vor. Geeignete Verbindungen sind neben Bor selbst Borcarbid, Bornitrid, Bortetrachlorid und/oder Boride, insbesondere Zirkoniumdiborid, Hatniumdiborid, Siliciumtetraborid und/oder Titandiborid, sowie borhaltige Polymere, insbesondere Polyborosilazane.

Die Nabe kann grundsätzlich auf zwei verschiedene Weisen mit der Bremsscheibe gekoppelt sein. Zum einen können die Mitnahmebohrungen oder Mitnahmeschlitze im Bereich des Innenrands der Bremsscheibe vorgesehen sein, und die Nabe kann einen flanschartig nach außen abragenden Rand aufweisen, an welchem sie mit dem Innenrand der Bremsscheibe verbunden ist. Die Ankoppelung kann aber auch dadurch erfolgen, daß die Mitnahmebohrungen im Bereich der Innenseite der Bremsscheibe vorgesehen sind und die Nabe an ihrem freien Ende mit der Innenseite der Bremsscheibe verbunden ist.

Eine erfindungsgemäße Bremseinheit aus einer Keramik-Bremsscheibe und einer nichtmetallischen Nabe zeichnet sich dadurch aus, daß eine Bremsscheibe aus faserverstärkter Keramik, vorzugsweise eine C/C-SiC-Bremsscheibe und eine Nabe aus der gleichen Fasermatrix, vorzugsweise eine C/C-Nabe vorgesehen sind. Die Nabe ist mit Bor dotiert und über einen flanschartig nach außen abragenden Rand in die Innenseite der Bremsscheibe eingeformt. Die Nabe besteht also aus einem Material, das verglichen mit dem keramischen Werkstoff der Bremsscheibe schadenstolerant, weniger spröde und leichter bearbeitbar ist. Das Material läßt eine höhere Dehnung zu. Eine starre Nabe ist dagegen nur eingeschränkt brauchbar. Erfindungsgemäß ist somit vorgesehen, daß diese Nabe stoffschlüssig in die Bremsscheibe eingeformt ist. Diese Befestigung gewährt eine hohe Belastbarkeit z. Bsp. bei Bremsmanövern, da keine "Sollbruchstelle", wie etwa in Form der bekannten Verbindungsschicht mehr vorliegt.

Das erfindungsgemäße Verfahren zur Herstellung von Formkörpern aus faserverstärkter C/C-SiC-Verbundkeramik zeichnet sich dadurch aus, daß Vorkörper hergestellt werden, die in den nicht zur Keramisierung vorgesehenen Bereichen mit Bor und/oder den erwähnten Borverbindungen dotiert werden. Bei den Vorkörpern kann es sich entweder um Grünlinge (also Vorkörper aus CFK-Werkstoff) oder um die aus der Pyrolyse der Grünlinge resultierenden C/C-Körper handeln.

Stattdessen können auch den jeweiligen Teilbereichen entsprechende Grünlinge als separate Vorkörper hergestellt werden. Die den nicht zu keramisierenden Teilbereichen entsprechenden Grünlinge oder die aus deren Pyrolyse resultierenden C/C-Körper werden unter Verwendung von Bor und/oder den erwännten Borverbindungen dotiert und spätestens vor der Silizierung zu dem gewünschten Formkörper zusammengefügt.

Die erste Alternative hat den Vorteil, daß durch die Dotierung der Bohrungsbereiche die Mitnahmebohrungen nicht vor der Flüssigsilizierung gebohrt zu werden brauchen. Die mechanische Bearbeitung der Bremsscheibe kann vielmehr auch bezüglich der Mitnahmebohrungen einheitlich nach der Keramisierung erfolgen.

Die zweite Alternative des erfindungsgemäßen Verfahrens sieht vor, daß die Mitnahmebohrungen spätestens vor der Flüssigsilizierung gebohrt werden. Anschließend werden bordotierte Hülsen oder Vollkörper in die Bohrung eingesetzt. Dies hat den Vorteil, daß die Infiltrationstiefe und die Bordotierung gut beherrschbar sind. Ausgangsprodukt sind entweder Grünlinge (d.h. CFK-Körper) oder bereits pyrolysierte nichtkeramische C/C-Körper, die beliebig kombinierbar sind. Es können also CFK-Bremsscheiben mit CFK- oder C/C-Hülsen bzw. Vollkörpern kombiniert werden. Es können auch C/C-Bremsscheiben mit CFK- oder C/C-Hülsen bzw. -Vollkörpern kombiniert werden. Die Hülsen oder Vollkörper können sowohl im CFK-Stadium als auch im C/C-Stadium dotiert werden.

Bei der Flüssigsilizierung dringt nur ein geringer Teil des Siliziums in den Randbereich der nunmehr pyrolysierten Hülse oder des Vollkörpers ein und führt somit zu einem Stoffschluß zwischen Hülse bzw. Vollkörper und Bremsscheibe. Die dotierte Hülse bzw. der dotierte Vollkörper wird aufgrund der Bordotierung nicht siliziert, sondern verbleibt als nichtkeramisches C/C-Werkstück. Wird ein Vollkörper verwendet, muss er anschließend nur noch mit einer Bohrung versehen werden. Ein Vollkörper oder Bolzen ist einfacher herstellbar als eine Hülse, und weniger empfindlich bei der Handhabung. Das erfindungsgemäße Verfahren hat den Vorteil, daß Teilbereiche eines Formkörpers gezielt keramisiert werden können. Die bordotierten Teilbereiche bleiben nichtkeramisch und lassen sich leichter nachbearbeiten. Sie lassen eine größere Dehnung zu als die keramisierten Teilbereiche, sind schadenstolerant und weniger spröde.

Das erfindungsgemäße Verfahren eignet sich entsprechend zur Herstellung einteiliger Bremseinheiten aus Bremsscheibe und nichtmetallischer Nabe, wenn die Bremsscheibe eine C/C-SiC-Bremsscheibe und die Nahe eine C/C-Nabe ist. In diesem Fall werden Bremsscheibe und Nabe z.B. als Grünlinge separat hergestellt, wobei der Grünling, der zur Nabe verarbeitet werden soll, mit Bor dotiert wird. Die beiden Teile werden dann zusammengefügt, pyrolysiert und keramisiert bzw. siliziert. Die Nabe entgeht der Keramisierung aufgrund der Bordotierung und bleibt somit als C/C-Bauteil formbar, während die Bremsscheibe keramisiert, wobei das Silizium in den Randbereich der Nabe eindringt und so zu einem sicheren Stoffschluss führt. Das Zusammenfügen der Grünlinge geschieht vorzugsweise durch Anformen der Bremsscheibe direkt am flanschartigen Rand der Nabe.

Eine andere Möglichkeit zur Herstellung nichtmetallischer Bremseinheiten sieht für die Bremsscheibe zwei Vorkörper vor. Dies ist besonders bei belüfteten Bremsscheiben vorteilhaft, bei denen zwei Scheibenhälften durch Stege miteinander verbunden sind. Die beiden Scheibenhälften und die Nabe werden seperat als Grünlinge hergestellt und zu C/C-Formkörpern pyrolysiert. Anschließend werden die beiden Bremsscheibenhälften entlang eines flanschartigen Rands der Nabe zusammengefügt, und die resultierende Bremseinheit wird siliziert. Da die Nabe bordotiert ist, wird sie nicht keramisiert. Ein geringer Anteil an Silizium dringt jedoch in den Randbereich der Nabe ein und sorgt für einen Stoffschluß.

Die Bordotierung kann auf mehreren Wegen vorgenommen werden. Zum einen können Bor und/oder die erwähnten Borverbindungen als Füllstoffe in den Grünling eingearbeitet werden. Zum anderen können die porösen C/C-Formkörper partiell mit Bor und/oder Borverbindungen getränkt oder entlang der Porenwände beschichtet werden. Das Bor bzw. die Borverbindungen können aus der flüssigen Phase oder aus der Gasphase unter Hochdruck eingebracht werden.

Ausführungsbeispiele der vorliegenden Erfindung werden im folgenden anhand der beigefügten Zeichnungen näher beschrieben. Es zeigen:
- Figur 1: ein erstes Ausführungsbeispiel einer erfindungsgemäßen Bremseinheit aus einer nichtmetallischen Bremsscheibe und einer Metallnabe;
- Figur 2: ein weiteres Ausführungsbeispiel einer erfindungsgemäßen Bremseinheit aus einer nichtmetallischen Bremsscheibe und einer metallischen Nabe;
- Figur 3: einen Längsschnitt durch eine Mitnahmebohrung in der in den Figuren 1 und 2 gezeigten Bremsscheibe mit einer Metallhülse;
- Figuren 4a-c: schematische Darstellungen von Abwicklungen erfindungsgemäßer Metallhülsen mit verschiedenen Umfangsschlitzen;
- Figuren 5a-c: schematische Darstellungen einzelner Verfahrensschritte des erfindungsgemäßen Verfahrens zur Herstellung einer mit C/C-Werkstoff ausgekleideten Bohrung;
- Figuren 6a-b: schematische Schnittdarstellungen einer erfindungsgemäßen Bremseinheit aus C/C-Nabe und C/C-SiC-Bremsscheibe vor (Figur 6a) und nach (Figur 6b) der Flüssigsilizierung;
- Figur 7: eine schematische Schnittdarstellung einer weiteren erfindungsgemäßen Bremseinheit aus C/C-Nabe und C/C-SiC-Bremsscheibe nach der Flüssigsilizierung.

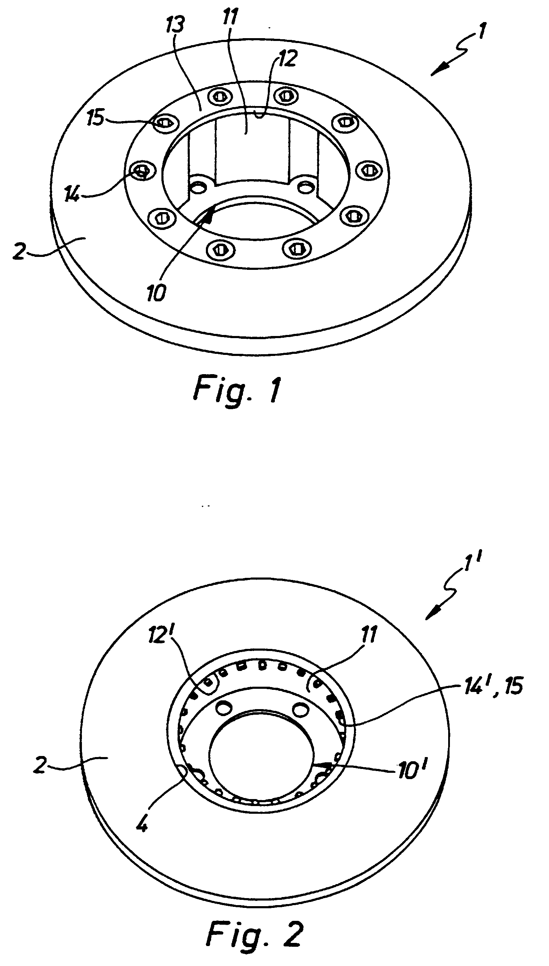

Figur 1 zeigt ein erstes Ausführungsbeispiel einer Bremseinheit 1 aus einer nichtmetallischen Bremsscheibe 2 und einer Metallnabe 10. Die Bremsscheibe 2 ist ringförmig mit einer mittigen Öffnung. Die Metallnabe 10 ist hutförmig mit einem zylinderförmigen Bereich 11, der sich durch die mittige Öffnung der Bremsscheibe 2 erstreckt. Am freien Ende 12 dieses zylindrischen Bereiches schließt sich ein flanschartig nach außen abragender Rand 13 an, der mit Bohrungen 14 versehen ist. Befestigungsbolzen 15 erstrecken sich durch die Bohrungen 14 und durch entsprechende (hier nicht sichtbare) Bohrungen 5 bzw. Radialschlitze im Bereich des Innenrandes 3 der Bremsscheibe 2.

In Figur 2 ist ein weiteres Ausführungsbeispiel einer erfindungsgemäßen Bremseinheit 1' mit einer Metallnabe 10' gezeigt. Dabei handelt es sich um eine sog. "schwimmende" Befestigung. Der zylinderförmige Bereich 11' der Nabe 10' weist diesmal keinen Flansch auf. Stattdessen sind an seinem freien Ende 12' eine Reihe von Bohrungen 14' vorgesehen.

Befestigungsbolzen 15 erstrecken sich durch diese Bohrungen 14' und (hier nicht sichtbare) entsprechende Bohrungen 5', die diesmal am Innenumfang 4 der Bremsscheibe 2 vorgesehen sind.

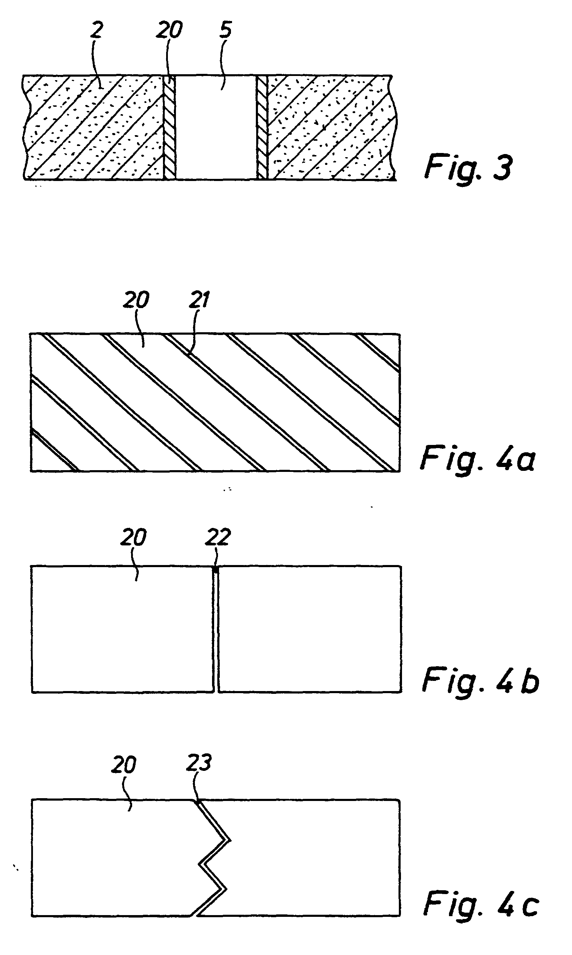

Erfindungsgemäß ist vorgesehen, daß die Bohrungen 5, 5' am Innenumfang 4 bzw. am Innenrand 3 der Bremsscheibe 2 plastisch ausgekleidet sind. Figur 3 zeigt einen schematischen, nicht maßstabsgetreuen Schnitt durch eine solche Bohrung 5, die mit einer Metallhülse 20 ausgekleidet ist. Die Metallhülse 20 besteht aus Kupfer mit einer Wandstärke von ca. 1 mm. Sie ist, wie aus den Figuren 4 a-c hervorgeht, mit einem über ihre gesamte Mantelhöhe verlaufenden Schlitz versehen. Der Schlitz kann schraubengangförmig angelegt sein (Schlitz 21 in Figur 4a), er kann aber auch gerade senkrecht zum Mantel verlaufen Schlitz 22 in Figur 4 b); er kann aber auch zickzackförmig verlaufen (Schlitz 23 in Figur 4c).

Die in Figur 3 gezeigte Hülse kann aber auch aus einem CFK- oder einem C/C-Werkstoff gefertigt sein. Diese Werkstoffe zeigen eine größere Dehnung als Keramik. Sie sind schadenstolerant und leichter bearbeitbar. Entsprechende Schlitze 21, 22, 23 können ebenfalls angebracht sein.

Bei Bremsscheiben aus C/C-SiC-Werkstoff ist erfindungsgemäß vorgesehen, daß der unmittelbare Bereich der Bohrungen 5, 5' mit Bor oder borhaltigen oder Bor-abgebenden Verbindungen dotiert sein kann. Das Herstellungsverfahren für C/C-SiC-Formkörper ist ansich bekannt. Kohlenstofffasern, Füllstoffe und pyrolysierbare flüssige Bindemittel werden homogenisiert und zu einem Grünling aus CFK-Werkstoff verpreßt, wobei das Bindemittel aushärtet. Der Grünling wird zu einem porösen C/C-Formkörper pyrolysiert, wobei das Bindemittel zu Kohlenstoff umgewandelt wird. Der C/C-Formkörper wird mit flüssigem Silizium getränkt und im Vakuum bei hohen Temperaturen keramisiert, wobei der Kohlenstoff ganz oder teilweise in Siliziumkarbid umgewandelt wird.

Der Grünling oder der nach der Pyrolyse erhaltene poröse Fremdkörper wird in den Bereichen, in denen die Bohrungen 5, 5' angebracht werden sollen, mit den erwähnten borhaltigen Substanzen in Kontakt gebracht. Dies geschieht zum Beispiel durch Tränken der Bohrungsbereiche mit borhaltigen Substanzen und Lösungen davon. Die borhaltigen Substanzen können auch aus der Gasphase unter Hochdruck punktuell aufgebracht werden. So können z.B. die Poren des C/C-Körpers beschichtet werden. Man kann dabei auch bekannte CVD-Verfahren nutzen, z.B. Aufbringen von BN₃ aus einar Mischung aus BCl₃/NH₃/H₂ bei 1000-1400°C oder von ZrB₂ aus einer Mischung ZrCl₄/BCl₃/H₂ bei 1000-1500°C.

Nach dem Keramisieren verbleiben diese Bereiche als uninfiltrierter, poröser C/C-Körper, da die Bordotierung eine Keramisierung wirksam verhindert. Die nichtdotierten Bereiche werden hingegen mit Silizium infiltriert und keramisiert, wobei teilweise oder vorwiegend SiC entsteht. In diese Bereiche werden anschließend die Bohrungen 5, 5' gesetzt, da sie - anders als die keramisierten Bereiche - einfacher zu bearbeiten sind. Dabei haben die Bohrungen 5, 5' einen geringeren Durchmesser als die dotierten Bereiche, so daß ein Randbereich als nichtkeramisierter C/C-Bereich stehenbleibt, der die Funktion einer Hülse ausübt.

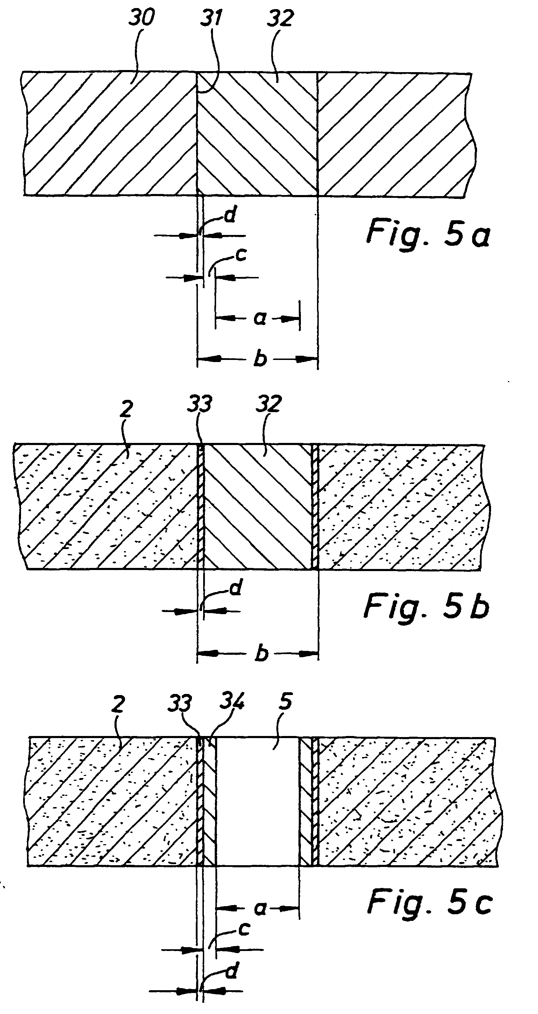

In den Figuren 5 a bis c ist schematisch dargestellt, wie entsprechend einer anderen Variante des erfindungsgemäßen Verfahrens im Bereich der Bohrung 5, 5' der Bremsscheibe 2 ein Bereich hergestellt werden kann, der bei der Flüssigsilizierung nicht keramisiert. Im Ausführungsbeispiel sollen eine Bohrung (5) mit einem Durchmesser (a) und einer Auskleidung mit der Wandstärke (c) hergestellt werden (vgl. Figur 5 c). Der Bereich (c)-(a)-(c) kann nach der Herstellung des Grünlings oder nach der Pyrolyse wie erwähnt nachträglich mit Bor- oder Borverbindungen dotiert werden. Nach der Silizierung und Keramisierung wird der Bereich (a) dann aufgebohrt weil er seine C/C-Struktur beibehalten hat und leichter zu bearbeiten ist.

Bevorzugt ist aber vorgesehen, daß in einem Vorkörper 30 vor (oder nach) der Pyrolyse eine Bohrung 31 mit dem Durchmesser (b) angebracht wird. Der Durchmesser (b) der Bohrung 31 ist größer als der Durchmesser (a) der später resultierenden Mitnahmebohrung 5. Wie aus Figur 5 a hervorgeht, umfasst der Durchmesser (b) auch die Wandstärke (c) für die spätere Hülse sowie einen schmalen Bereich (d) für den durch die Silizierung bewirkten Stoffschluss. In diesem Ausführungsbeispiel ist der Vorkörper (30) ein Grünling; er kann aber auch ein C/C-Körper sein.

In die Bohrung 31 wird ein Vollkörper 32 als Grünling eingesetzt, der mit Bor oder Borverbindungen dotiert ist. Das Bor oder die Borverbindungen werden bei der Herstellung des Grünlings (32) als Füllstoff in einem Mengenanteil von 5 - 35 Gew.-% zugesetzt. Der Faservolumenanteil beträgt ca. 30 - 60 Vol.- %, vorzugsweise ca. 40 Vol.-%. Das Masseverhältnis von Graphitfüllstoff zu den Borverbindungen beträgt 1 : 1 oder weniger, wobei das Graphit durch Fasern ersetzt ist.

Nach dem Setzen des Vollkörpers 32 wird der Vorkörper 30 ggf. der Pyrolyse und der Flüssigsilizierung unterworfen. Das Ergebnis ist schematisch in Figur 5 b dargestellt. Die Bremsscheibe 2 ist nun keramisiert, wobei das Silizium auch in einen schmalen Wandbereich 33 des Vollkörpers 32 eingedrungen ist und so zu einen Stoffschluss zwischen Vollkörper 32 und Bremsscheibe 2 führt. Der Vollkörper 32 selbst weist eine C/C-Struktur auf; er wurde pyrolysiert, aber nicht keramisiert.

Der Vollkörper 32 wird nun mit der Bohrung 5 mit dem Durchmesser (a) versehen. Dabei bleibt ein Randbereich 34 des Vollkörpers 32 stehen, da dieser ja größer als die Bohrung 5 gewählt wurde. Dieser Randbereich 34 des Vollkörpers 32 bildet nun die Auskleidung oder Hülse der Bohrung 5 der Bremsscheibe 2.

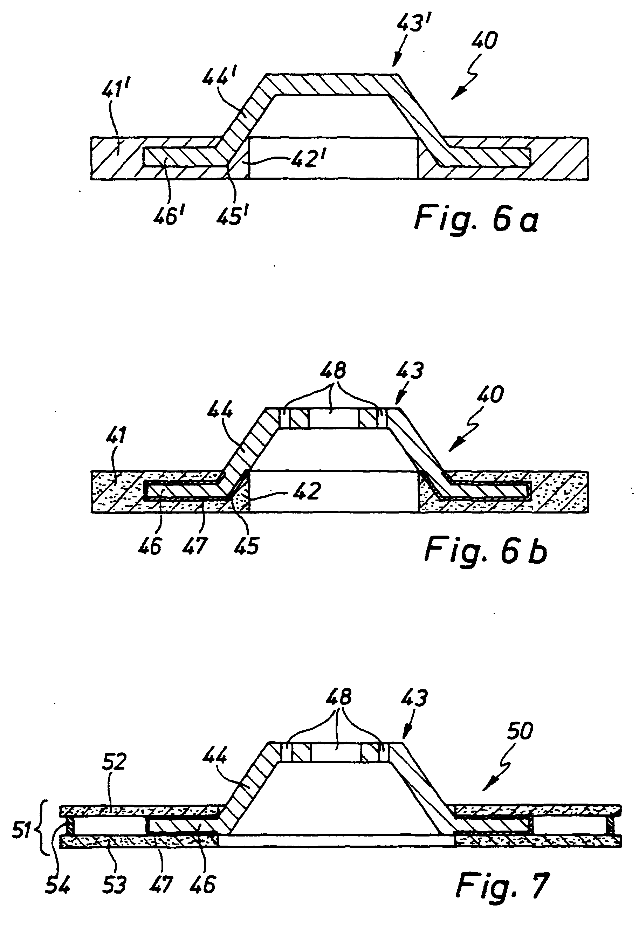

Auf ähnliche Weise lassen sich auch Bremseinheiten 40 aus einer Bremsscheibe (41) und einer nichtmetallische Nabe (43) herstellen, wenn die Bremsscheibe (41) aus einem C/C-SiC-Werkstoff und die Nabe (43) aus einem C/C-Werkstoff vorgesehen sein soll (Figuren 6a, 6b). Dazu werden zwei Grünlinge angefertigt; nämlich der Bremsscheiben-Vorkörper (41') und der Nabenvorkörper (43'), der ebenfalls einen zylindrischen Bereich 44' und an dessem freien Enden 45' einen flanschartigen Rand 46' aufweist (vgl. Figur 6a).

Gemäß einem bevorzugten Verfahren wird zunächst der Nabenvorkörper 43' hergestellt. Anschließend wird um seinen Rand 46' herum der Bremsscheiben-Vorkörper 41' gepresst. Somit ist der Rand 46' in den Innenbereich 42' der Bremsscheibe eingeformt. Der Nabenvorkörper 43' ist wie beschrieben mit Bor dotiert. Die ganze Bremseinheit 40 wird anschließend der Pyrolyse und Flüssigsilizierung unterworfen.

Das Ergebnis ist in Figur 6 b schematisch dargestellt. Die Bremsscheibe 41 ist siliziert und keramisiert. Das Silizium ist in einen schmalen Bereich 47 des Randes 46 der Nabe 43 eingedrungen und sorgt für einen sicheren Stoffschluss zwischen Nabe 43 und Bremsscheibe 41. Die Nabe 43 selbst ist ist in den Innenbereich 42 der Bremsscheibe 41 eingeformt. Sie ist nicht keramisiert, sondern liegt als nichtkeramischer, C/C-Werkstoff vor, der problemlos nachgearbeitet werden kann, z.B. mit Bohrungen 48 versehen werden kann.

In Figur 7 ist eine Bremseinheit 50 mit belüfteten Bremsscheiben 51 dargestellt. Die Bremsscheiben 51 sind ein Verbund aus zwei Vorkörpern 52, 53, die an Stegen 54 zusammengefügt sind. Hier werden zunächst die Vorkörper für die Bremsscheibenhälften und die Nabe 43 hergestellt und pyrolysiert, wobei der Nabenvorkörper bordotiert wird. Anschließend werden die beiden Vorkörper für die Bremsscheibenhälften oberhalb und unterhalb des Randes 46 der Nabe 43 zusammengefügt. Die gesamte Bremseinheit wird dann mittels Flüssigsilizierung keramisiert, wobei die Bremsscheibenhälften entlang ihrer Stege 54 durch Stoffschluß fest miteinander verbunden werden. Die Nabe 43 wird nicht keramisiert. Jedoch dringt Silizium in den Rand 47 der Nabe 43 ein und sorgt so für einen festen Stoffschluss zwischen Nabe 43 und Bremsscheibe 51.

## Patentansprüche

1. Bremseinheit (1) mit einer nichtmetallischen Bremsscheibe (2) aus Keramik und einer metallischen Nabe (10, 10'), welche sich mit ihren einander zugekehrten Rändern radial überlappen und mittels eines Kranzes von die überlappenden Ränder axial durchdringenden Befestigungsbolzen (15) mechanisch verbunden sind, wobei die Bremsscheibe (2) zur Aufnahme der Befestigungsbolzen (15) im Bereich ihres Innenrands (3) entsprechende Mitnahmebohrungen (5, 5') oder radiale Mitnahmeschlitze aufweist, dadurch gekennzeichnet, daß die Mitnahmebohrungen (5, 5') oder Mitnahmeschlitze mit einer Hülse (20) aus plastisch verformbaren Material ausgekleidet sind oder der Scheibenwerkstoff örtlich gezielt in diesem Bereich plastisch verformbar ausgebildet ist.

2. Bremseinheiz nach Anspruch 1, dadurch gekennzeichnet, daß die Mitnahmebohrungen (5, 5') oder Mitnahmeschlitze mittels einer weichen Metallhülse (20), insbesondere einer Kupfer- oder Aluminiumhülse ausgekleidet sind.

3. Bremseinheit nach Anspruch 1, dadurch gekennzeichnet, daß die Mitnahmebohrungen (5, 5') oder Mitnahmeschlitze mittels einer Hülse aus kohlenstoffaser-verstärktem Kunststoff (CFK) oder kohlenstoffaser-verstärktem Kohlenstoff (C/C) ausgekleidet sind.

4. Bremseinheit nach Anspruch 2 oder 3, dadurch gekennzeichnet, daß die Hülse (20) an einer Umfangsstelle auf der ganzen Länge geschlitzt ist und unter mechanischer Vorspannung an der Leibung der Mitnahmebohrung (5,5') bzw. des Mitnahmeschlitzes anliegt.

5. Bremseinheit nach Anspruch 4, dadurch gekennzeichnet, daß der Schlitz (21, 22, 23) entlang einer Mantel-, Schraubengang- oder Zick-Zack-Linie verläuft.

6. Bremseinheit nach einem der Ansprüche 2 bis 5, dadurch gekennzeichnet, daß die Hülse (20) eine Wandstärke von etwa 1/20 des Durchmessers, der Mitnahmebohrung (5, 5') bzw. des Mitnahmeschlitzes aufweist.

7. Bremseinheit nach Anspruch 1, dadurch gekennzeichnet, daß bei Ausbildung der Bremsscheibe (2) als keramische C/C-SiC-Bremsscheibe der unmittelbare Bereich der Mitnahmebohrungen (5, 5') bzw. Mitnahmeschlitze örtlich begrenzt Bor und/oder borhaltige Verbindungen und/oder Bor-abgebende Verbindungen enthält und in diesem Bereich als nichtkeramischer C/C-Werkstoff vorliegt.

8. Bremseinheit nach Anspruch 1, dadurch gekennzeichnet, daß bei Ausbildung der Bremsscheibe (2) als keramische C/C-SiC-Bremsscheibe die Mitnahmebohrungen (5,5') bzw. Mitnahmeschlitze mittels einer Hülse (34) aus kohlenstoffaser-verstärktem Kohlenstoff ausgekleidet sind, die Bor und/oder borhaltige Verbindungen und/oder Bor-abgebende Verbindungen enthält und die an ihrem Außenumfang in Siliziumcarbid übergeht und mit der Bremsscheibe (2) stoffschlüssig verbunden ist.

9. Bremseinheit nach einem der Ansprüche 7 oder 8, dadurch gekennzeichnet, daß als borhaltige bzw. Bor-abgebende Verbindungen Borcarbid, Bornitrid, Bortetrachlorid und/oder Boride, insbesondere ZrB₂, HfB₂, SiB₄ und/oder TiB₂ sowie borhaltige Polymere, insbesondere Polyborosilazane vorgesehen sind.

10. Bremseinheit nach einem der Ansprüche 7 bis 9, dadurch gekennzeichnet, daß das Bor und/oder die borhaltigen bzw. Bor-abgebenden Verbindungen in einer Konzentration von 5 - 35 Gew.-% vorliegen.

11. Bremseinheit nach einem der Ansprüche 7 bis 10, dadurch gekennzeichnet, daß der C/C-Werkstoffbereich bzw. die Hülse (34) In einer radialen Schichtstärke von etwa 1/20 des Bohrungsdurchmessers vorgesehen ist.

12. Bremseinheit nach einem der vorhergehenden Ansprüche, dadurch gekennzeichnet, daß die Mitnahmebohrungen (5) bzw. Mitnahmeschlitze im Bereich des Innenrands (3) der Bremsscheibe (2) vorgesehen sind und die Nabe (10, 10') einen flanschartig nach außen abragenden Rand (12) aufweist, an welchem sie mit dem Innenrand (13) der Bremsscheibe (2) verbunden ist.

13. Bremseinheit nach einem der Ansprüche 1 bis 11, dadurch gekennzeichnet, daß die Mitnahmebohrungen (5') im Bereich der Innenseite (4) der Bremsscheibe (2) vorgesehen sind und die Metallnabe (10') an ihrem freien Ende (12') mit der Innenseite (4) der Bremsscheibe (2) verbunden ist.

14. Verfahren zur Herstellung von Bremseinheiten nach Anspruch 1, 7 oder 8, bei dem
- Fasern, Faserstoffbündel oder Filze aus Kohlenstoff, Bindemittel und Füllstoffe homogenisiert, in Form gepresst und ausgehärtet werden,
- der resultierende Grünling (CFK-Formkörper) anschließend pyrolysiert wird,
- der dabei entstandene poröse C/C-Formkörper mit flüssigem Silizium infiltriert und keramisiert wird,
dadurch gekennzeichnet, daß zur Herstellung nur teilweise keramisierter Formkörper (40, 50)
dadurch gekennzeichnet, daß zur Herstellung nur teilweise keramisierter Bremsscheiben
1. der Grünling oder der poröse Formkörper in den nicht zur Keramisierung vorgesehenen Bereichen mit Bor und/oder Bor-abgebenden Verbindungen und/oder borhaltigen Verbindungen dotiert wird, oder
2. den jeweiligen Teilbereichen (2, 34) entsprechende Grünlinge als Vorkörper (30, 32) hergestellt werden, wobei
- zur Herstellung der den nicht zu keramisierenden Teilbereichen (34) entsprechenden Grünlinge (32) Bor und/oder borhaltige Verbindungen und/oder Bor-abgebende Verbindungen als Füllstoffe verwendet werden und die Grünlinge vor der Pyrolyse zu der gewünschten Bremsscheibe zusammengefügt werden; oder
- die Grünlinge pyrolysiert werden, die dabei entstandenen porösen Formkörper mit Bor und/oder borhaltigen und/oder borabgebenden Verbindungen dotiert werden und vor der Keramisierung zu der gewünschten Bremsscheibe zusammengefügt werden.

15. Verfahren nach Anspruch 14, dadurch gekennzeichnet, daß als borhaltige und/oder Bor-abgebende Bornitrid, Bortetrachlorid, Borcarbid und/oder Boride, insbesondere ZrB₂, HfB₂, SiB₄ und/oder TiB₂ sowie borhaltige Polymere, insbesondere Polyborosilazane, verwendet werden.

16. Verfahren nach Anspruch 14 oder 15, dadurch gekennzeichnet, daß das Bor und/oder die Borverbindungen in einem Anteil von 5 - 35 Gew.-% zugesetzt werden.

17. Verfahren nach einem der Ansprüche 14 bis 16, dadurch gekennzeichnet, daß Bor und/oder die Borverbindungen dem C/C-Formkörper aus einer flüssigen Phase oder in der Gasphase unter Hochdruck zugeführt werden.

18. Verfahren nach einem der Ansprüche 14 bis 16, dadurch gekennzeichnet, daß zur Herstellung von Bremseinheiten gemäß Anspruch 8 ein nicht-dotierter Bremsscheiben-Vorkörper (30) mit Bohrungen (31) versehen wird, deren Durchmesser größer ist als derjenige der gewünschten Mitnahmebohrungen (5, 5') oder Mitnahmeschlitze, und daß in die Bohrungen (31) anschließend mit Bor und/oder Borverbindungen dotierte Vorkörper in Form von Hülsen oder Vollkörpern (32) eingesetzt werden.

19. Verfahren nach einem der Ansprüche 14 bis 18, dadurch gekennzeichnet, daß jeder Vorkörper (30, 32, 41', 43') entweder als CFK-Vorkörper oder als C/C-Vorkörper verwendet wird.

20. Bremseinheit (40, 50) mit einer Bremsscheibe (41, 51) aus einem faserverstärkten keramischen Werkstoff und einer Nabe (43) aus der gleichen Fasermatrix, die auch dem faserverstärkten keramischen Werkstoff stofflich zugrundeliegt, dadurch gekennzeichnet, daß die Bremsscheibe (41, 51) und die Nabe (43) stoffschlüssig miteinander verbunden sind, wobei die Nabe Bor und/oder borhaltige Verbindungen und/oder Bor-abgebende Verbindungen enthält und wobei die Fasermatrix der Nabe (43) in die Fasermatrix der Bremsscheibe (41, 51) übergeht und im Übergangsbereich in Siliziumcarbid übergeht.

21. Verfahren zur Herstellung einer Bremseinheit nach Anspruch 20, dadurch gekennzeichnet, daß ein mit Bor oder Borverbindungen dotierter Naben-Vorkörper mit einem nicht-dotierten Bremsscheiben-Vorkörper zusammengefügt wird.

22. Verfahren nach Anspruch 21, dadurch gekennzeichnet, daß zunächst der bordotierte Naben-Vorkörper (43') als CFK-Körper hergestellt wird und anschließend durch Pressung und Aushärtung von nicht-bordotiertem Homogenat zu einem CFK-Bremsscheiben-Vorkörper (41') entlang dem flanschartigen Rand (46') des Naben-Vorkörpers (43') direkt der Grünling der vollständigen Bremseinheit (40') hergestellt wird.

23. Verfahren nach Anspruch 21 oder 22, dadurch gekennzeichnet, daß der Naben-Vorkörper (41') und der Bremsscheiben-Vorkörper (43') als C/C-Formkörper hergestellt werden, die anschließend zusammengefügt und keramisiert werden.
